# EUROPÄISCHE PATENTSCHRIFT

(11) **EP 1 932 876 B1**
(45) Veröffentlichungstag und Bekanntmachung des Hinweises auf die Patenterteilung: **18.04.2012**
(21) Anmeldenummer: 07122852.2
(22) Anmeldetag: 11.12.2007
(51) Int. Cl.: C08J 9/06, C08L 27/06

(54) **Verfahren zur Herstellung von Polymer-Schäumen**
Method for manufacturing polymer foams
Procédé destiné à la fabrication de mousses de polymères

(30) Priorität: 12.12.2006 EP 06125949
(43) Veröffentlichungstag der Anmeldung: 18.06.2008
(73) Patentinhaber: BASF SE, 67056 Ludwigshafen (DE)
(72) Erfinder: Weiss, Axel, 67346 Speyer (DE); Bothe, Marc, 67117 Limburgerhof (DE); Nolte, Rainer, 67117 Limburgerhof (DE); Krüger, Christian, 67346 Speyer (DE); Landherr, Kenneth, 67071 Ludwigshafen (DE); Wildburg, Gerald, 67346 Speyer (DE)

(56) Entgegenhaltungen:
- EP-A1- 0 911 358
- WO-A1-99/60064
- DE-A1- 19 922 915

## Beschreibung

Die vorliegende Erfindung betrifft ein Verfahren zur Herstellung von Polymer-Schäumen, sowie ein Verfahren zur Schaumextrusion, ein Polymeres (P), das in diesem Verfahren verwendet wird.

Es versteht sich, dass die genannten Beispiele der Erfindung lediglich zur Erläuterung der Erfindung dienen und keinesfalls einschränkend gemeint sind. Gleichfalls dienen spezifisch genannte Kombinationsmöglichkeiten lediglich als Beispiel. Andere geeignete Kombinationen sind daher ebenso Teil der Erfindung. Die Gegenstände und Ausführungsformen der vorliegenden Erfindung können den Ansprüchen entnommen werden oder werden in der Beschreibung genannt.

Polymer-Schäume sind für viele technische Zwecke verwendbar und können günstig hergestellt werden. Insbesondere Schäume aus Polyvinylhalogenid-Harzmassen sind zu niedrigen Kosten erhältlich und zeichnen sich durch hohe mechanische und chemische Stabilität aus. Diese Kombination erstrebenswerter Eigenschaften hat dazu geführt, dass besonders Polyvinylhalogenid-Harzmassen und Polyvinylhalogenid-Schäume breite Verwendung gefunden haben. Polyvinylhalogenid-Schäume kombinieren die oben genannten Merkmale mit weiteren positiven Eigenschaften, beispielsweise niedrigem Materialeinsatz, niedrigem Gewicht oder guten Isolations- und Lärmschutzeigenschaften. Häufig können die Eigenschaften von Polyvinylhalogenid-Schäumen durch die Verwendung geeigneter Schäumungs-Hilfsmittel nochmals verbessert werden, wodurch neue technische Anwendungen ermöglicht oder Merkmale, wie Kosteneffizienz oder Produktqualität, verbessert werden. Ein wichtiges Kriterium für die Beurteilung neuer Schäumungs-Hilfsmittel ist die Dichte des entstandenen Polymer-Schaums (Schaumdichte). Sie stellt ein Maß für die Schäumungseffizienz dar und zeigt bei stark geschäumten Polymer-Schäumen geringe Werte. Da besonders Polyvinylhalogenid-Schäume breite Verwendung finden, besteht ein ständiger Bedarf an Polyvinylhalogenid-Schäumen mit geringeren Schaumdichten und folglich ein ständiger Bedarf an leistungsfähigeren Schäumungs-Hilfsmitteln, die insbesondere für die Schäumung von Polyvinylhalogenid-Harzmassen geeignet sind.

Um die Schäumung von Polymer Schäumen zu unterstützen oder zu optimieren werden bereits verschiedene Schäumungs-Hilfsmittel verwendet, deren Leistungsfähigkeit aber häufig begrenzt und daher unbefriedigend ist.

EP 0 911 358 A1 offenbart beispielsweise die Verwendung von Emulsionspolymersiaten, enthaltend von 20 bis 75 % Methylmethacrylat, als Schäumungs-Hilfsmittel zur Schäumung von Polyvinylchlorid-Harzmassen.

EP 1 153 936 B1 beschreibt eine Methode der Emulsionspolymerisation unter Anwesenheit kleiner Mengen Cu- und Fe-Ionen, wodurch Polymere mit besonders hohen Molmassen erhalten werden. Die entstandenen Polymerisate können unter anderem als Hilfsmittel zur Extrusion von Polyvinylhalogenid-Schäumen verwendet werden. Mittels dieser Methode sind gemäß der Schrift auch Säure enthaltene Polymere zugänglich, die als Filmbildner in Textilien, im Bausektor oder in der Kunst verwendet werden können.

Wie oben dargestellt, herrscht ein ständiger Bedarf an Polymer-Schäumen mit möglichst geringen Schaumdichten. Es ergab sich daher die Aufgabe ein neues Schäumungs-Hilfsmittel und ein Verfahren zu seiner Verwendung zur Verfügung zu stellen, dass die Schäumung von Polymeren, insbesondere von Polyvinylhalogenid-Harzmassen, verbessert. Eine weitere Aufgabe war es, Mischungen und Zusammenstellungen zur Verfügung zu stellen, die die Herstellung von Polymer-Schäumen und besonders Polyvinylhalogenid-Schäumen erleichtern oder deren Eigenschaften, beispielsweise die Schaumdichte, verbessern. Aufgabe war es auch ein Verfahren zur Schaumextrusion zur Verfügung zu stellen, mit dem die Eigenschaften der produzierten Schäume verbessert werden.

Diese Aufgaben konnte durch die Erkenntnis gelöst werden, dass unter Verwendung radikalisch polymerisierbarer Carbonsäuremonomere, insbesondere in Kombination mit Methylmethacrylat, Polymere (P) erhalten werden können, insbesondere Polymere(P) mit mindestens 60 Gew.-% einpolymerisiertem Methylmethacrylat, die zu einer deutlich reduzierten Schaumdichte von Polymer-Schäumen gegenüber einer Vergleichsprobe führen. Durch Verwendung des erfindungsgemäßen Verfahrens beziehungsweise der Verwendung des Polymeren (P) ist es möglich, Polymer-Schäume, besonders Polyvinylhalogenid-Schäume, mit sehr geringen Schaumdichten herzustellen, wobei die erhaltene Schaumdichte nach dem Auftriebsverfahren bestimmt werden kann. Mit diesem Verfahren wird das Gewicht von mindestens zwei auf identische Weise hergestellten Polymer-Schäumen mittels einer Analysenwaage bestimmt. Anschließend wird das Volumen der Polymer-Schäume durch Eintauchen in einem mit destilliertem Wasser gefülltem Messzylinder bei Raumtemperatur bestimmt. Aus der Volumendifferenz vor und nach dem Eintauchen wird die Schaumdichte berechnet.

Gegenstände der Erfindung sind daher ein Verfahren zur Herstellung von Polymer-Schäumen, mittels eines Polymeren (P), enthaltend von 0,3 bis 3 Gew.-%, bezogen auf das Gesamtgewicht von (P), einer Komponente A, die sich von radikalisch polymerisierbaren Carbonsäuren (Monomer (A)) ableitet, sowie Polymer-Schäume, die unter Verwendung des entsprechenden Polymeren (P) als Schäumungs-Hilfsmittel hergestellt wurden.. Ein weiterer Gegenstand der Erfindung ist ein Verfahren zur Schaumextrusion unter Verwendung des Polymeren (P), die Verwendung des Polymeren (P) als Schäumungs-Hilfsmittel sowie die Verwendung radikalisch polymerisierbarer Carbonsäure (Monomer (A)) zur Herstellung eines Polymeren (P) und die Verwendung von radikalisch polymerisierbarer Carbonsäure (Monomer (A)) in einem Verfahren zur Schaumextrusion.

### Polymere (P)

Erfindungsgemäß enthält das Polymere (P) von 0,3 bis 3 Gew.-%, bevorzugt von 0,5 bis 2,5 Gew.-% besonders bevorzugt von 1 bis 2 Gew.-%, und ganz besonders bevorzugt von 0,8 bis 1,5 Gew.-%, bezogen auf das Gesamtgewicht des Polymers (P), der Komponente A.

Gemäß der Erfindung leitet sich die Komponente A von verzweigten oder unverzweigten Alkyl-, Aryl- oder cyclischen und radikalisch polymerisierbaren Carbonsäuren (Monomer (A)) ab. Beispiele solcher radikalisch polymerisierbaren Carbonsäuren sind: Acrylsäure, Maleinsäure, Itaconsäure oder C₁- bis C₆-Alkylacrylsäuren, wie Isopropylacrylsäure, Dodecylacrylsäure, Methacrylsäure, Butylacrylsäure oder Cyclohexylacrylsäure. Als Monomer (A) kann auch eine Kombination dieser Säuren eingesetzt werden. Bevorzugt werden Acrylsäure oder Methacrylsäure. Besonders bevorzugt ist Acrylsäure.

Darüber hinaus kann das in dem erfindungsgemäßen Verfahren eingesetzte Polymere (P) eine weitere Komponente B enthalten, die sich von Estern der Methacrylsäure (Monomer (B)) ableitet.

Als Monomer (B) sind verzweigte oder unverzweigte Alkyl-, Aryl- oder cyclische Ester der Methacrylsäure geeignet. Beispielsweise ein Alkylmethacrylat mit einem verzweigten, unverzweigten oder ringförmigen C₁- bis C₈-Alkylrest, wie Methylmethacrylat, 2-Ethylmethacrylat, Propylmethacrylat, Butylmethacrylat, Pentylmethacrylat, Hexylmethacrylat. Selbstverständlich ist es auch möglich eine Kombination dieser als Monomer (B) einzusetzen. Bevorzugt wird Methylmethacrylat allein verwendet.

In der Regel enthält das Polymere (P) von 60 bis 99,7 Gew.-% der Komponente B. Bevorzugt beträgt der Anteil an Komponente B von 70 bis 99,5 Gew.-% und besonders bevorzugt von 75 bis 90 Gew.-% der Komponente B, jeweils bezogen auf das Gesamtgewicht des Polymers (P).

Optional kann das Polymere (P) noch eine weitere Komponente C enthalten (Monomer (C)), die sich von Monomeren unterschiedlichster Art und bevorzugt von Estern der Acrylsäure ableitet.

Als Monomer (C) kommen beispielsweise Ester der Acrylsäure in Betracht. Beispiele solcher Ester sind: verzweigte, unverzweigte oder ringförmige C₁- bis C₈- Alkylacrylate, beispielsweise Methylacrylat, Ethylacrylat, Butylacrylat, Isopropylacrylat, Dodecylacrylat, Cyclohexylacrylat. Als Monomer (C) kann auch eine Kombination von Estern der Acrylsäure verwendet werden.

Als Monomer (C) wird bevorzugt Methylacrylat, Ethylacrylat oder Butylacrylat verwendet. Besonders bevorzugt werden Methylacrylat, Ethylacrylat oder Butylacrylat alleine verwendet.

Das Polymers (P) enthält typischerweise von 0 bis 37,7 Gew.-%, bevorzugt von 0 bis 29,5 Gew.-% und ganz besonders bevorzugt von 8,5 bis 24,2 Gew.-% Komponente C, die sich von Monomeren (C) ableitet.

Die verwendeten Gewichtsprozente beziehen sich immer auf das Gesamtgewicht des Polymeren (P) im getrockneten Zustand und addieren sich zu 100 %. Hierzu wird das Polymere (P) in einem Trockenschrank bei 140 °C bis zur Gewichtskonstanz getrocknet.

Bevorzugte Kombinationen der Monomere (A), (B) und (C) sind beliebige Kombinationen der jeweils bevorzugt verwendeten Monomere (A), (B) und (C). Hierbei können die jeweils bevorzugt verwendeten Monomere (A), (B) oder (C) für jeweils eine der Komponenten A, B oder C kombiniert oder alleine verwendet werden. Sie können aber auch alleine oder in einer solchen Kombination als eine der Komponenten A, B oder C mit den anderen Komponenten A, B oder C, bestehend aus einem oder einer Kombination der jeweils bevorzugten Monomeren (A), (B) oder (C), verwendet werden.

In einer Ausführungsform enthält das Polymere (P) von 0,8 bis 1,5 % Acrylsäure als Komponente A, von 75 bis 90 Gew.-% Methylmethacrylat als Komponente B und von 8,5 bis 24,2 Gew.-% Butylacrylat als Komponente C, beziehungsweise als ihre monomeren Bausteine. Die Gewichtsprozente sind jeweils auf das Gesamtgewicht des Polymeren (P) bezogen.

In einer weiteren Ausführungsform enthält das Polymere (P) von 1 bis 2 Gew.-% Acrylsäure als Komponente A, von 78 bis 79 Gew.-% Methylmethacrylat als Komponente B und 20 Gew.-% Butylacrylat als Komponente C, beziehungsweise als ihre monomeren Bausteine. Die Gewichtsprozente sind jeweils auf das Gesamtgewicht des Polymeren (P) bezogen.

Das erfindungsgemäße Verfahren beinhaltet die Verwendung von einem oder mehreren Polymeren (P), die bevorzugt von 0,5 bis 2 Gew.-%, bezogen auf das Gesamtgewicht des Polymeren (P), Komponente A als Baustein enthält. Besonders bevorzugt beinhaltet das Verfahren die Verwendung von 0,5 bis 2 Gew.-%, Acrylsäure oder Methacrylsäure oder eine Mischung von diesen als Komponente A. Ganz besonders bevorzugt beinhaltet das Verfahren die Verwendung von 0,8 bis 1,5 Gew.-%, Acrylsäure oder Methacrylsäure oder eine Mischung von diesen als Komponente A.

Die Polymerisation des Polymeren (P) kann beispielsweise durch statistische Polymerisation oder als Blockpolymerisation und beispielsweise in Form einer Emulsionspolymerisation, Suspensionspolymerisation oder einer Lösungspolymerisation erfolgen. Im erfindungsgemäßen Verfahren ist eine Emulsionspolymerisation bevorzugt, besonders bevorzugt ist eine radikalische Emulsionspolymerisation, ganz besonders bevorzugt eine wässrige radikalische Emulsionspolymerisation.

Methoden zur Durchführung einer radikalischen Emulsionspolymerisation sind dem Fachmann an sich bekannt. Die Monomere können entweder gemeinsam vorgelegt oder kontinuierlich oder portionsweise zugegeben werden, hierbei können die Monomere jeweils gemeinsam, in Kombination oder einzeln vorliegen. Erfindungsgemäß werden zur Herstellung des Polymeren (P) bevorzugt alle Monomere vorgelegt und die Polymerisation in Form einer Batchpolymerisation ausgeführt.

Für eine Emulsionspolymerisation können verschiedene Emulgatoren verwendet werden. Geeignete Emulgatoren sind beispielsweise: Alkalisalze von längerkettigen Fettsäuren, Alkylsulfonate, Alkylbenzolsulfonate oder alkylierte Biphenylethersulfonate, beispielsweise Na-Salze langkettiger Sulfonate, insbesondere Alkyl substituierte Biphenylethersulfonate, Salze der Abietinsäure oder deren Derivate oder Sulfobernsteinsäureester. Emulgatoren können einzeln oder in Mischungen unterschiedlicher Emulgatoren verwendet und auf einmal oder portionsweise zugegeben werden. Üblicherweise werden von 0,01 bis 5 Gew.-% Emulgator, bezogen auf das Gesamtgewicht des Polymerisationsansatzes, verwendet. In einer Ausführungsform des erfindungsgemäßen Verfahrens werden von 0,01 bis 3 Gew.-% Emulgator, bezogen auf das Gesamtgewicht des Polymerisationsansatzes, verwendet. Bevorzugt wird der Emulgator in mehreren Portionen und zu unterschiedlichen Zeiten zugegeben. In einer Ausführungsform werden zuerst ein Teil der Emulgatormenge und zu mindestens einem zweiten Zeitpunkt die restliche Emulgatormenge, zugegeben.

Für das erfindungsgemäße Verfahren kommen eine große Anzahl von Initiatoren in Betracht. Bevorzugt werden wasserlösliche Initiatoren verwendet. Geeignete Initiatoren sind beispielsweise: Natrium-, Kalium- oder Ammoniumpersulfat, tert-Butylhydroperoxid, wasserlösliche Azoverbindungen sowie die Salze der 4,4'-Azobis[4-cyanopentansäure] oder 2,2'-Azobis[2-amidinopropanhydrochlorid]. Für Polymerisationen bei relativ niedriger Temperatur eignen sich insbesondere Redoxsysteme aus einem Persulfat oder einem Hydroperoxid sowie einem Reduktionsmittel in Verbindung mit einem Eisen(II)-Sulfat. Geeignete Reduktionsmittel sind beispielsweise Natrium-metabissulfit, Natriumhydroxymethansulfinat und Ascorbinsäure.

Vorteilhafterweise werden kleine Mengen Initiator verwendet, beispielsweise kleiner als 0,1 Gew.-%, bezogen auf die Gesamtmenge der Monomere. Bevorzugt sind die Mengen kleiner als 0,05 Gew.-% und besonders bevorzugt kleiner als 0,02 Gew.-%, jeweils bezogen auf die Gesamtmenge der Monomere.

Für das erfindungsgemäße Verfahren können der Initiator oder das Reduktionsmittel einzeln oder in Mischung oder in Mischung mit anderen Stoffen zum gleichen Zeitpunkt oder zu verschiedenen Zeitpunkten, portionsweise oder als Gesamtmenge und in fester oder flüssiger Form, beispielsweise als Lösung, zum Polymerisationsansatz gegeben werden. Der Initiator und das Reduktionsmittel können jeweils aus einer Art bestehen oder unterschiedlicher Art sein. Beispielsweise kann der Initiator aus einer Anzahl Initiatoren unterschiedlicher Art bestehen.
In einer Ausführungsform der Erfindung wird ein Redoxsystem aus Natriumpersulfat und Natriumhydroxymethansulfinat verwendet, wobei zuerst Natriumpersulfat und zu einem anderen Zeitpunkt Natriumhydroxymethansulfinat zugegeben wird.

Die erfindungsgemäße Polymerisationsreaktion kann bei gleichbleibender Temperatur oder bei verschiedenen Temperaturen durchgeführt werden. Bevorzugt wird eine Emulsionspolymerisation bei Temperaturen im Bereich von 30 bis 95 °C durchgeführt. Üblicherweise wird der Polymerisationsansatz einem Temperaturprofil unterzogen. Bevorzugt wird die Polymerisation bei einer niedrigen Temperatur gestartet und anschließend die Temperatur erhöht.

In einer Ausführungsform wird der Polymerisationsansatz auf eine Temperatur im Bereich von 10 bis 40 °C erwärmt, nach Zugabe des Initiators und der nach einigen Minuten folgenden Zugabe des Reduktionsmittels und einer weiteren Wartezeit von einigen Minuten über einen Zeitraum von mindestens einer halben Stunde gleichmäßig von 30 auf 70 °C erwärmt und nach mindestens einer weiteren halben Stunde bei einer Innentemperatur im Bereich von 50 bis 100 °C auf Raumtemperatur abgekühlt.

Erfindungsgemäß können Emulgatoren und Initiatoren gemeinsam oder getrennt zum Polymerisationsansatz gegeben werden. In einer Ausführungsform wird der Initiator als zweitletzte und ein Reduktionsmittel als letzte Komponente zugegeben.

Die Dauer, Temperatur und Druckverhältnisse der erfindungsgemäßen Polymerisation können in einem breiten Bereich variiert und dem jeweiligen Verwendungszweck angepasst werden. Eine bevorzugte Ausführungsform ist den Beispielen zu entnehmen.

Der K-Wert des Polymeren (P) liegt vorteilhafterweise höher als 140, bevorzugt höher als 160, besonders bevorzugt höher als 175 und ganz besonders bevorzugt höher als 180 und wird nach DIN EN ISO 1628-1 bei 25 °C und einer Polymerkonzentration von 0,1 g/100 ml in Tetrahydrofuran gemessen.

Die Teilchengröße des Polymeren (P) kann durch die Wahl der Polymerisationsbedingungen eingestellt werden, wie sie beispielsweise in DE 2 130 989 beschrieben werden. Unter anderen hängt die Teilchengröße von der Rührergeschwindigkeit ab. Erfindungsgemäß sind mittlere Teilchendurchmesser d₅₀ (Volumenmittel) im Bereich von 50 bis 300 nm bevorzugt, besonders bevorzugt ist eine mittlere Teilchengröße im Bereich von 70 bis 250 nm. Ganz besonders bevorzugt sind Teilchendurchmesser, im Bereich von 70 bis 200 nm. In einer Ausführungsform weist das Polymere (P) eine mittlere Teilchengröße im Bereich von 170 bis 190 nm auf. Der mittlere Teilchendurchmesser d₅₀ kann mittels der dynamischen Lichtstreuung an einer 0,005 bis 0,01 gewichtsprozentigen wässrigen Emulsion beziehungsweise Dispersion bei 23 °C mittels des Durchmessers der Kumulantenauswertung der gemessenen Autokorrelationsfunktion nach ISO-Norm 13321 bestimmt werden.

Am Ende der Polymerisation liegt der Feststoffgehalt der Emulsion bevorzugt im Bereich von 30 bis 60 Gew.-%, bezogen auf das Gesamtgewicht der Emulsion, beziehungsweise der Dispersion. Üblicherweise erhöht sich während der Polymerisation der Feststoffgehalt der Emulsion, so dass die Emulsion allmählich in eine Dispersion übergeht. Eine bevorzugte Ausführungsform der Erfindung ist die Herstellung einer Dispersion durch eine Batch-Polymerisation, bei der die monomeren Bausteine vor dem Beginn der Polymerisation vollständig im Reaktor gemischt werden. Das Polymere (P) kann aus der Emulsion, beziehungsweise der Dispersion durch alle geeigneten Techniken gewonnen werden. Dies kann beispielsweise durch Fällung, Filtration und anschließende Trocknung passieren. Zur Fällung kann beispielsweise gekühlt werden oder eine Säure-Koagulation oder Aussalzung verwendet werden. Die Säure-Koagulation kann beispielsweise mit Salz- oder Schwefelsäure durchgeführt werden. Die Aussalzung kann beispielsweise mit Aluminiumchlorid, Calciumchlorid, Magnesiumchlorid, Magnesiumsulfat, Aluminiumsulfat oder Calciumacetat durchgeführt werden.

Das Polymere (P) kann in nasser, feuchter oder in trockener Form und beispielsweise als Filterkuchen oder als Pulver gewonnen werden. Bevorzugt wird das Polymere (P) als trockenes Pulver gewonnen. Zur Trocknung kann das Polymere (P) beispielsweise gefriergetrocknet oder sprühgetrocknet werden. Alternativ kann eine Kombination von beiden Trocknungsverfahren verwendet werden. Besonders bevorzugt ist die Sprühtrocknung, wodurch das Polymere (P) als nahezu wasserfreies Pulver gewonnen werden kann.

Die Sprühtrocknung kann in bekannter Weise durchgeführt werden, wie es beispielsweise im Spray drying handbook, K. Masters, 4th Edition, 1985, auf den Seiten von 171 bis 354 und auf den Seiten von 520 bis 524 beschrieben ist. Für das erfindungsgemäße Verfahren liegt die Eintrittstemperatur des Trockengases in den Sprühturm zweckmäßigerweise im Bereich von 100 bis 200 °C, während die Temperatur des getrockneten Polymeren (P) am Ausgang des Sprühturms (Austrittstemperatur) bevorzugt im Bereich von 40 bis 100 °C beträgt. Im Einzelfall kann es selbstverständlich auch nötig sein von diesen Werten abzuweichen.

In einer Ausführungsform liegt die Eintrittstemperatur im Bereich von 140 bis 180 °C, die Austrittstemperatur im Bereich von 60 bis 90 °C.

Durch die Sprühtrocknung wird das Polymere (P) in der Regel als rieselfähiges Pulver mit einem Teilchendurchmesser von 50 bis 500 µm, insbesondere mit einem Teilchendurchmesser von 100 bis 300 µm, erhalten.

### Verfahren zur Schaumextrusion

Das Polymere (P) kann einzeln oder in Kombination mit Polymeren (P) anderer Zusammensetzung oder in Kombination mit anderen Schäumungs-Hilfsmitteln zur Schaumextrusion verwendet werden. Andere Schäumungs-Hilfsmittel sind alle Arten von Stoffen, die die Schäumung von Polymeren unterstützen können und keine Treibmittel sind, beispielsweise hochpolymere Copolymere auf Basis von Polymethylmethacrylat, die keinem Polymeren (P) entsprechen, und beispielsweise aus 80 Gew.-% Methylmethacrylat und 20 Gew.-% n-Butylacrylat bestehen.

Bevorzugt wird das Polymere (P) als alleiniges Schäumungs-Hilfsmittel eingesetzt. Besonders bevorzugt wird das Polymere (P) mit einem K-Wert größer als 175 als alleiniges Schäumungs-Hilfmittel verwendet.

In dem erfindungsgemäßen Verfahren zur Schaumextrusion kann das Polymere (P) zur Schäumung von Polymeren unterschiedlicher Art verwendet werden. Die Polymere, die mittels des erfindungsgemäßen Verfahren geschäumt werden können, können entweder Homo- oder Copolymere sein. Die Homo- oder Copolymere können aus Polyvinylhalogeniden, bevorzugt Polyvinylchlorid (PVC) oder anderen Polymeren bestehen.

Andere Polymere können beispielsweise sein: Polyethylene, Polypropylene, Polyamide, Polyoxymethylene, Polystyrole, Polycarbonate, Polyvinylidenfluoride, Polyphenylenoxide, Polymethylmethacrylate, Polytetrafluorethylene, Perfluoralkoxy-Polymere, oder Polymere oder Copolymere mit beispielsweise C₂- C₁₀ Alkyl(meth)acrylaten, Styrolen, α-Methylstyrolen, Acrylnitrilen, Methacrylnitrilen, Vinylethern, Alkyl-Vinylethern, wie Vinyl-methyl-ethern oder Vinyl-butyl-ethern, Vinylestern, wie Vinylacetaten, Vinylpropionaten, Vinylidenchloriden, Olefinen, wie Ethylenen oder Propylenen, sowie mit Maleinsäureanhydriden oder Polyetherimiden oder Mischungen von diesen, als monomere Bausteine.

Weiterhin kommen Polymer-Mischungen oder Polymer-Legierungen in Betracht. Bevorzugte Polymer-Mischungen oder Polymer-Legierungen sind Kombinationen aus Polyvinylhalogeniden und anderen Polymeren. Beispielsweise können die Polymer-Mischungen beziehungsweise die Polymer-Legierungen aus Polyvinylchlorid und Homo- oder Copolymeren aus Styrol, bevorzugt α-Methylstyrol, oder aus Polyvinylchlorid und Homo- oder Copolymeren aus Acrylnitrilen oder aus Polyvinylchlorid und Homo- oder Copolymeren aus C₂ - C₁₀ Alkyl(meth)acrylaten, bevorzugt Homo- oder Copolymere aus Methylmethacrylaten, die mehr als 70 Gew.-% Methylmethacrylat als monomere Bausteine enthalten, bestehen.

Wird das Polymere (P) zur Schäumung von Polymeren verwendet, die auch zur Herstellung des Polymeren (P) verwendet werden können, so weicht die gewichtsprozentuale Zusammensetzung oder die Art der verwendeten monomeren Bausteine oder beides des Polymeren (P) von der gewichtsprozentualen Zusammensetzung oder der Art der verwendeten monomeren Bausteine oder beides von der des zu schäumenden Polymers ab.

Ganz besonders bevorzugt sind Polymer-Mischungen oder Polymer-Legierungen, die Polyvinylhalogenide enthalten. Der Gehalt an Polyvinylhalogeniden in den Polymer-Mischungen oder Polymer-Legierungen liegt in der Regel in einem Bereich von größer als 50 Gew.-%. Bevorzugt liegt er in einem Bereich von größer als 80 Gew.-%, jeweils bezogen auf das Gesamtgewicht der Polymer-Mischung beziehungsweise der Polymer-Legierung.

Bevorzugt wird das Polymere (P) zur Schaumextrusion von Polyhalogenid-Harzmassen und insbesondere zur Herstellung von Polyvinylhalogenid-Schäumen verwendet, wobei das Polymere (P) für zahlreiche Arten von Polyvinylhalogenid-Harzmassen geeignet ist.
Bevorzugt handelt es sich bei den Polyvinylhalogenid-Harzmassen um Co- oder Homopolymere des Vinylchlorids, insbesondere um Copolymere des Vinylchlorids mit mindestens 80 Gew.-% Vinylchlorid, bezogen auf das Gesamtgewicht der Polyvinylhalogenid-Harzmasse. Besonders bevorzugt handelt es sich um Homopolymere des Vinylchlorids. Ganz besonders bevorzugt handelt es sich um Polyvinylchlorid.

Erfindungsgemäß wird das Polymere (P) mit den anderen Polymeren und insbesondere mit den Polyvinylhalogenid-Harzmassen in einem Mengenbereich von 0,5 bis 20 Gew.-% verwendet. Bevorzugt wird es in einem Mengenbereich von 2 bis 15 Gew.-%, besonders bevorzugt in einem Mengenbereich von 3 bis 10 Gew.-% und ganz besonders bevorzugt in einem Mengenbereich von 5 bis 10 Gew.-%, bezogen auf das Gesamtgewicht des zu schäumenden Polymers und des Polymers (P), verwendet.

Das Polymere (P) kann in getrockneter Form, beispielsweise nach einer Sprühtrocknung, oder in feuchter Form, beispielsweise nach einer Fällung oder Filtration, verwendet werden.

Erfindungsgemäß werden die Polymere, bevorzugt die Polyvinylhalogenid-Harzmasse, mit einem oder mehreren Polymeren (P) und optional einem oder mehreren Treibmitteln oder einem oder mehreren anderen Schäumungs-Hilfsmitteln oder einem oder mehreren Zusätzen oder einer beliebigen Kombination von diesen vermischt. Als Treibmittel kommen neben physikalischen Treibmitteln insbesondere chemische Treibmittel in Betracht. In der Regel sind dies Mischungen aus einer Säure, insbesondere Citronensäure, und einer Verbindung, die sich unter dem Einfluss der Säure zersetzt. Solche Mischungen können beispielsweise aus Citronensäure und Natriumhydrogencarbonat bestehen. In einer Ausführungsform wird eine Kombination aus einer Azodicarbonsäurediamidzubereitung und Natriumhydrogencarbonat verwendet. In einer anderen Ausführungsform wird eine Azodicarbonsäurediamidzubereitung alleine verwendet.

Die Menge der Treibmittel liegt bevorzugt in einem Bereich von 0,05 bis 20 Gew.-%, besonders bevorzugt in einem Bereich von 1 bis 10 Gew.-%, bezogen auf das Gesamtgewicht des zu schäumenden Polymers. Informationen zu möglichen Treibmitteln sind dem Fachmann aus der Literatur bekannt, beispielsweise aus dem Plastics Additives Handbook, 5th Edition, 2001, Hanser Verlag, Editor H. Zweifel, auf den Seiten von 701 bis 713.

Mögliche Zusätze sind: Modifizierungsmittel zur Verbesserung der Schlagzähigkeit, Wärmeformbeständigkeit oder der Witterungsbeständigkeit, Stabilisatoren, wie Licht- bzw. UV-Stabilisatoren oder wie PVC-Stabilisatoren, Gleitmittel, Antiblockmittel, Antistatika, Glasfasern, Ton, Kohlepartikel, Weichmacher, Flammschutzmittel, Füllstoffe, Farbmittel. Die Art und Menge der Zusätze kann je nach dem späteren Verwendungszweck des Polymer-Schaums variiert werden.

Die jeweils verwendete Menge der möglichen Zusätze kann hierbei, je nach Art des Zusatzes, in großen Bereichen variieren. Hinweise zu möglichen Zusätzen sind dem Fachmann aus der Literatur, beispielsweise aus dem Plastics Additives Handbook, 5th Edition, 2001, Hanser Verlag, Editor H. Zweifel, für Antioxidantien auf den Seiten von 10 bis 19, für Licht- bzw. UV-Stabilisatoren auf den Seiten von 247 bis 403, für PVC-Stabilisatoren auf den Seiten von 442 bis 465, für Gleitmittel auf den Seiten von 536 bis 548, für Antiblockmittel auf den Seiten von 587 bis 589, für Antistatika auf den Seiten von 632 bis 636, für Flammschutzmittel auf den Seiten von 685 bis 689, für Farbmittel auf den Seiten von 822 bis 850 oder für Füllstoffe auf den Seiten von 914 bis 935, bekannt.

In einer Ausführungsform der Erfindung liegt das oder die Polymere (P) in einer Mischung mit mindestens einer weiteren Komponente, wie dem oder den Polymeren, insbesondere der Polyvinylhalogenid-Harzmasse, oder einem oder mehreren Treibmitteln, einem oder mehreren anderen Schäumungs-Hilfsmitteln oder einem oder mehreren Zusätzen vor. Dies kann in Form einer Mischung geschehen, die mindestens ein Polymeres (P) enthält und an einem anderen Ort oder zu einem späteren Zeitpunkt weiterverarbeitet wird. Alternativ kann die Mischung in Form einer Zusammenstellung vorliegen. Als eine Zusammenstellung wird hierbei eine Ansammlung von mindestens einem Polymeren (P) und mindestens einer der genannten Komponenten in getrennten Behältnissen verstanden, die sich ihrerseits in einem gemeinsamen Behältnis befinden können. Bevorzugt sind die Komponenten in ihren relativen Mengen aufeinander abgestimmt. In der Regel enthält die Zusammenstellung technische Informationen das Polymere (P) und die Komponenten betreffend, insbesondere enthalten die technischen Informationen Angaben zu Mengenverhältnissen für die sinnvolle Weiterverarbeitung der Komponenten.

Erfindungsgemäß kann die Mischung, des oder der Polymeren (P) mit dem oder den Polymeren, oder einem oder mehreren Treibmitteln, einem oder mehreren anderen Schäumungs-Hilfsmitteln oder einem oder mehreren Zusätzen in einem breitem Temperaturbereich durchgeführt werden. Die Temperatur kann sich während der Mischung verändern und wenn nötig gezielt beeinflusst werden. Begrenzend für den geeigneten Temperaturbereich sind die Schmelz- und Siedepunkte sowie die thermische Stabilität der verwendeten Materialien und Geräte. In der Regel erfolgt die Mischung bei einer Temperatur im Bereich von 25 bis 150 °C, besonders bevorzugt in einem Bereich von 60 bis 130 °C und ganz besonders bevorzugt in einem Bereich von 90 bis 120 °C. In einer Ausführungsform wird eine Temperatur im Bereich von 100 bis 120 °C verwendet.

Die erfindungsgemäße Mischung kann mittels einer geeigneten Mischvorrichtung gemischt werden. Dies kann beispielsweise in einem Heißmischer, einem Henschel-Mixer, einem Banbury-Mixer, einem V-Mixer, einem Band-Mischer, einem Kneter oder in einem Extruder, beispielsweise einem Einschnecken-, Mehrschnecken- oder Kolbenextruder, geschehen. In einer Ausführungsform wird ein Heißmischer verwendet.

Das oder die Polymere (P), das oder die Polymere, Treibmittel, Schäumungs-Hilfsmittel oder Zusätze können gleichzeitig, in Kombination oder einzeln und kontinuierlich oder portionsweise in fester oder flüssiger Form als Mischungskomponente in die Mischvorrichtung gegeben werden. Unter Umständen können Mischvorrichtungen gleicher oder unterschiedlicher Art hintereinander oder parallel verwendet werden, wobei in den Mischvorrichtungen jeweils gleiche oder unterschiedliche Mengen der gleichen oder unterschiedlichen Mischungskomponenten in gleicher oder unterschiedlicher Form und unter gleichen oder unterschiedlichen Bedingungen gemischt werden können.

Neben der Temperatur kann der Fachmann die Eigenschaften der Mischung durch die Mischungsintensität und die Form der Mischungsbestandteile einstellen. Die Mischungsintensität kann durch die Art der Mischvorrichtung, sowie deren Betriebsbedingungen, wie Rührgeschwindigkeit, die Form des Rührgerätes oder den herrschenden Druckverhältnissen beeinflusst werden. Liegt die Mischungskomponente in fester Form vor, so beeinflussen die Teilchengröße und die mechanischen Eigenschaften der Mischungskomponente den Mischvorgang. Liegt die Mischungskomponente in flüssiger Form vor, so richten sich ihre Eigenschaften auch nach der Art des eventuell vorhandenen Lösungsmittels und der Konzentration der Mischungskomponente.

Die angestrebten Eigenschaften der Mischung, wie eine homogene oder inhomogene Verteilung der Mischungskomponenten oder die mechanischen Eigenschaften, beispielsweise ihrer Fließfähigkeit, richten sich nach den angestrebten Eigenschaften des Polymer-Schaumes und können durch Routineexperimente für die jeweilige Aufgabenstellung optimiert werden.

Die mit dem oder den Polymeren (P) und eventuellen anderen Mischungskomponenten vermischten Polymere, beziehungsweise Polyvinylhalogenid-Harzmassen, können frei schäumbar verarbeitet oder zwangsgeschäumt werden. Der Begriff "frei schäumbar" meint hierbei einen kontinuierlichen Schäumungsprozess, bei dem das aus einer Richtung kommende Material in alle verbleibenden fünf Raumrichtungen frei schäumen kann, ohne dass es gegen einen Druck arbeiten muss, der größer als der momentan herrschende Luftdruck ist. Der Begriff "zwangsgeschäumt" meint hierbei einen Prozess, bei dem das schäumbare Material auf mindestens einer Seite am freiem Schäumen gehindert wird, d. h. gegen einen Druck arbeiten muss, der größer als der momentan herrschende Luftdruck ist. Die Polymer-Schäume und insbesondere die Polyvinylhalogenid-Schäume können erfindungsgemäße durch bekannte Methoden, bevorzugt durch Schaumextrusion, hergestellt werden.

Die Schaumextrusion kann mit geeigneten Extrudern, beispielsweise mit Einschnecken-, Mehrschnecken- oder Kolbenextrudern durchgeführt werden.

Für das erfindungsgemäße Verfahren zur Schaumextrusion wird der Extruder mit den gemischten oder ungemischten Mischungskomponenten, insbesondere dem oder den Polymeren (P) und dem zu schäumenden Polymer, in der Regel in Form von Pulvern oder Granulaten gefüllt.

Innerhalb des Extruders werden die ungemischten Mischungskomponenten vermischt und homogenisiert. Der Aufbau der verwendeten Extruder ist variabel und muss für den jeweiligen Zweck angepasst werden, so richtet sich beispielsweise die Anzahl und Geometrie der verwendeten Extruderschnecken nach dem jeweiligen Zweck. In der Regel unterteilt sich der Extruder in eine Füllzone, eine Kompressionszone, eine Entgasungszone, eine Verarbeitungszone und ein Endstück. Vor dem Endstück befindet sich üblicherweise ein Sieb durch das die entstandene Masse extrudiert wird. Dieses Sieb weist in der Regel Lochgrößen von 120 bis 150 µm auf, wobei auch Lochgrößen von 45 µm möglich sind.

Kleine Lochgrößen führen in der Regel zu einem besonders homogenen Extrudat und verbessern üblicherweise die Qualität der extrudierten Produkte. Zur Unterstützung der eventuell ablaufenden Reaktionen und zur Erhaltung einer bestimmten Viskosität wird der Extruder typischerweise in unterschiedlichen Abschnitten mit unterschiedlicher Temperatur betrieben und entsprechend beheizt oder gekühlt. Hierdurch durchläuft die Extrusionsmasse ein Temperaturprofil, dessen Ausgestaltung sich nach der jeweiligen Aufgabe richtet und beispielsweise von der Art des Polymers und der vorhandenen beziehungsweise gewünschten Viskosität abhängt. Um optimale Ergebnisse zu erreichen kann die Einstellung die Verweilzeit der Extrusionsmasse im Extruder, beziehungsweise der Verweilzeit in der jeweiligen Temperaturzone, von Bedeutung sein. Die Verweilzeit kann beispielsweise durch die Schneckengeschwindigkeit und die jeweilige Wegstrecke im Extruder eingestellt werden. Ein weiterer Faktor für die Schaumextrusion sind die Druckverhältnisse im Extruder. Die für die jeweilige Aufgabe optimalen Einstellungen kann der Fachmann durch Routineexperimente ermitteln.

Erfindungsgemäß kann die Extrusion auch in der Form der Coextrusion erfolgen. Hierbei werden mindestens zwei Polymere mit in der Regel unterschiedlichen Eigenschaften gleichzeitig extrudiert, wodurch in der Regel ein Polymer durch ein anderes Polymer beschichtet oder umschlossen wird. Als Polymere kommen hierfür prinzipiell alle natürlichen oder synthetischen Polymere in Frage. Bevorzugt werden synthetische Polymere mit einem erfindungsgemäß hergestellten Schaum umschlossen oder beschichtet.

Mittels der erfindungsgemäßen Schaumextrusion ist es weiterhin möglich, nicht polymere Materialien, beispielsweise Metalle oder Siliziummaterialien, insbesondere Kupfer-, Stahldrähte, Metallrohre oder Glasfasern, zu umhüllen oder zu beschichten.

Der hergestellte Schaum kann sich beispielsweise im Inneren oder auf der Oberfläche des hergestellten Produktes befinden. Die extrudierte Masse kann je nach Verwendungszweck entweder frei schäumen oder in eine, mehr oder weniger definierte, Form gezwungen werden. Übliche Verfahren zur Extrusion von Polymeren finden sich beispielsweise in: Handbuch der Kuststoffextrusionstechnik II, Extrusionsgrundlagen, Hanser Verlag, 1986, auf den Seiten von 424 bis 484 oder in Handbook of Polymeric Foams and Foam Technology, Hanser Verlag, 1991, auf den Seiten von 243 bis 272.

Die nach dem erfindungsgemäßen Verfahren hergestellten Schäume können anschließend weiter verarbeitet werden. Vorteilhaft wird das entsprechend des Verfahrens verarbeitete Polymer, bevorzugt die Polyvinylhalogenid-Harzmasse, zwangsverschäumt, um Formteile mit möglichst glatter Oberfläche und einer oder mehreren Schaumschichten zu erzeugen. Diese Schaumschichten können sich untereinander beispielsweise in ihren mechanischen oder chemischen Eigenschaften oder ihrer Schaumdichte unterscheiden. Es ist auch möglich, dass sich die Schaumdichte innerhalb einer Schaumschicht verändert, beispielsweise zur Wand des zwangsverschäumten Formteils zunimmt. Die Anzahl, Größe und Größenverteilung der Gasblasen im Schaum ist entscheidend für die Eigenschaften des Schaumes.

Die erfindungsgemäß zwangsverschäumten Produkte zeichnen sich in der Regel durch eine besonders glatte und daher beispielsweise gut bedruckbare Oberfläche aus.

Bevorzugt kann das Verfahren, beziehungsweise die das Polymere (P) enthaltenden Polymer-Schäume, Mischungen oder Zusammenstellungen, zur Herstellung von Rohren, Schaumplatten, Profilen und anderen Formteilen, beispielsweise Werbeboards, Autoteilen oder Möbeln, Schläuchen, Beschichtungen, beispielsweise zur Isolierung von Drähten, Schaum-Folien, Dämmungs-Material oder zur Herstellung von Gerätegehäusen oder anderen Form- und Fertigteilen insbesondere für die Fahrzeug oder Bauindustrie verwendet werden. Bevorzugt hergestellt werden Werbeboards, Autoteile, Schaumplatten und Schaumkernrohre, besonders bevorzugt sind Schaumplatten und Schaumkernrohre.

Durch die Auswahl geeigneter Verfahrensbedingungen, beispielsweise durch die geeignete Auswahl der Art und Menge der Treibmittel oder der Temperatur beim Schäumen oder der Art und Menge des verwendeten Polymers (P), lassen sich die Schaumdichten und Schaumstruktur und somit auch andere Produkteigenschaften, die von den Eigenschaften des Schaumes beeinflusst werden, steuern. So ergeben höhere Anteile des Polymers (P) in der Regel geringere Schaumdichten, der gleiche Effekt wird in der Regel auch durch einen höheren Gehalt radikalisch polymerisierbarer Carbonsäuremonomere (Monomere (A)) im Polymeren (P) erhalten. Von der Schaumdichte hängen wiederum andere Eigenschaften, beispielsweise die Schall- und Wärme-Dämmungs eigenschaften, die Oberflächeneigenschaften oder die mechanische Stabilität, Zähigkeit, Dehnbarkeit, Bruchdehnung, Langzeitermüdung oder Spannungserholung ab. Bevorzugt werden Polymerschäume mit niedrigen Schaumdichten zur Material- oder Gewichtseinsparung oder für beides verwendet.

Durch die Verwendung des offenbarten Polymeren (P) beziehungsweise des offenbarten Verfahrens zur Schaumextrusion können neue Polymer-Schäume mit neuen Eigenschaften, beispielsweise Polymer-Schäume mit einer geringen Schaumdichte oder besonders glatten Oberflächen, hergestellt werden. Hierdurch werden neue Verwendungsmöglichkeiten für Polymer-Schäume geschaffen oder schon bekannte Verwendungen optimiert.

### Beispiele:

### Herstellung zweier Varianten des Polymers (P), Beispiel 1 und Beispiel 2, und eines Vergleichsbeispiels

Ein Gemisch aus 726 g entionisiertem Wasser, 1,67 g einer 45 Gew.-%igen wässrigen Lösung des Natriumsalzes eines C₁₂-substituierten Biphenylethersulfonates (Dowfax ® 2A1, Marke der Dow Chemical Company), 7,5 g einer 1 Gew.%igen wässrigen Eisen(II)sulfat-Lösung und 7,1 g einer 25 Gew.-%igen wässrigen Ammoniak-Lösung für Beispiel 1 und 0,45 g einer 25 Gew.-%igen wässrigen Ammoniak-Lösung für Beispiel 2 und das Vergleichsbeispiel wurden bei Raumtemperatur unter Stickstoff gerührt. Anschließend wurden die weiteren Bestandteile der Beispiele 1 und 2 beziehungsweise des Vergleichsbeispiels über 1 h gleichmäßig zudosiert.
für Beispiel 1: 585 g Methylmethacrylat, 150 g n-Butylacrylat und 15 g Acrylsäure für Beispiel 2: 592,5 g Methylmethacrylat, 150 g n-Butylacrylat und 7,5 g Acrylsäure für das Vergleichsbeispiel: 600 g Methylmethacrylat und 150 g n-Butylacrylat

Anschließend wurde die entstandene Emulsion auf 29 °C erwärmt und 1,34 g einer 7 Gew.-%igen wässrigen Natriumpersulfat-Lösung zugegeben. Nach 5 Minuten wurden 7,5 g einer 10 Gew.-%igen wässrigen Lösung von Natriumhydroxymethansulfinat (Rongalit C ® der BASF AG) zugegeben. Nach weiteren 10 Minuten wurde die Innentemperatur über einen Zeitraum von 2,5 h gleichmäßig von 30 auf 70 °C gesteigert und nach 30 Minuten nach Beginn der Temperaturerhöhung 41,7 g einer 45 Gew.-%igen wässrigen Lösung des Natriumsalzes einer C₁₂-substituierten Biphenylethersulfonates (Dowfax ® 2A1, Marke der Dow Chemical Company) über 0,5 h gleichmäßig zudosiert. Nach Erreichen von 70 °C Innentemperatur wurden 1,5 g einer 10 Gew.-%igen wässrigen tert-Butylhydroperoxid-Lösung zugegeben. Nach 1 h bei 70 °C wurde die Reaktionsmischung auf Raumtemperatur abgekühlt.

Für Beispiel 1 wies die erhaltene wässrige Polymerisatdispersion einen Feststoffgehalt von 49,6 Gew.-% auf. Die mittlere Teilchengröße betrug 182 nm, der K-Wert des Polymers betrug 188.

Für Beispiel 2 wies die erhaltene wässrige Polymerisatdispersion einen Feststoffgehalt von 49,1 Gew.-% auf. Die mittlere Teilchengröße betrug 180 nm, der K-Wert des Polymers betrug 184.

Im Vergleichsbeispiel wies die erhaltene wässrige Polymerisatdispersion einen Feststoffgehalt von 48,6 Gew.-% auf. Die mittlere Teilchengröße betrug 169 nm, der K-Wert des Polymers 186.

Die Feststoffgehalte wurden bestimmt, indem eine definierte Menge der wässrigen Polymerisatdispersion von ca. 5 g bei 140 °C in einem Trockenschrank bis zur Gewichtskonstanz getrocknet und anschließend erneut gewogen wurde. Es wurden jeweils zwei separate Messungen durchgeführt. Der in den jeweiligen Beispielen angegebene Wert stellt den Mittelwert der beiden Messergebnisse dar.

Der mittlere Teilchendurchmesser der Beispiele 1 und 2 und des Vergleichsbeispiels wurde durch die dynamische Lichtstreuung an einer 0,005 bis 0,01 gewichtsprozentigen wässrigen Dispersion bei 23 °C mittels des Durchmessers der Kumulantenauswertung der gemessenen Autokorrelationsfunktion nach ISO-Norm 13321 bestimmt.

Der K-Wert der Polymerisate wurde nach DIN EN ISO 1628-1 bei 25 °C und einer Polymerkonzentration von 0,1 g/100 ml in Tetrahydrofuran gemessen.

### Herstellung der Beispiele 1 und 2 und des Vergleichsbeispiels in Pulverform

Die Polymerisat-Dispersionen der Beispiele 1 und 2 sowie des Vergleichsbeispiels 1 wurden durch Sprühtrocknung in einem Sprühturm mit 1,0-mm-Einstoffdüsenzerstäubung bei 45 bar unter N₂-Geradeausfahrweise mit einer Turmeintrittstemperatur von 160 °C und einer Austrittstemperatur von 85 °C zu einem rieselfähigen Pulver getrocknet.

### Herstellung des PVC-Schaums

In einem Heißmischer wurden bei 110 °C jeweils folgende Komponenten gemischt: 100 Massenanteile eines Suspensions-PVC (K-Wert 57, Solvin 257 RF der Firma Solvin), 5 Massenanteile Kreide (Hydrocarb 95 T der Firma Omya), 3 Massenanteile Titandioxid (Kronos 2220 der Firma Kronos Titan), 4 Massenanteile eines Stabilisators (IKA 700 F1 der Firma IKA), enthaltend eine bleihaltige Verbindung, 1,8 Massenanteile Natriumhydrogencarbonat (Bicar der Firma Solvay), 0,2 Massenanteile Azodicarbonsäurediamidzubereitung (Genitron EPE der Firma Bayer) sowie 2 bis 6 Massenanteile (entsprechend Tabelle 1 und 2) des Polymers (P) gemäß Beispiel 1 beziehungsweise Beispiel 2 und des Vergleichsbeispiels als getrocknetes Pulver.
Das Gemisch wurde auf einem Labormess-Extruder mit folgender Ausstattung extrudiert: Standardschnecke (kämmend, gegenläufig, konisch), Schneckendurchmesser 20/31,3 mm (außen/innen), Lochscheibe, Rundstrang-Düsenkopf 6 mm. Die Drehzahl betrug 30 Minuten⁻¹, die Temperatur der vier Heizzonen 150/170/170/150°C.

### Bestimmung der Schaumdichten

Das Gewicht von zwei extrudierten Stäben (Länge ca. 8 cm) wurde mittels einer Analysenwaage bestimmt. Anschließend wurde bei Raumtemperatur durch Eintauchen in einem mit destilliertem Wasser gefülltem Messzylinder das Volumen bestimmt. Aus der Volumendifferenz vor und nach dem Eintauchen wurde die Schaumdichte berechnet.

**Tabelle 1**

| Anteil Komponente A | Beispiel 1 2 Gew.-% | | | Beispiel 2 1 Gew.-% | | | Vergleichsbeispiel ohne | | |
|---|---|---|---|---|---|---|---|---|---|
| Anteil im Extrudat | 2 | 4 | 6 | 2 | 4 | 6 | 2 | 4 | 6 |
| Schaumdichte in g/l | 0,373 | 0,231 | 0,208 | 0,293 | 0,241 | 0,231 | 0,649 | 0,332 | 0,266 |

### Bestimmung des Stabdurchmessers

Mit Hilfe einer Schieblehre wurde der Durchmesser an 10 verschiedenen Stellen der ca. 8 cm langen Probenstäbe ermittelt und der Mittelwert gebildet.

**Tabelle 2**

| Anteil Komponente A | Beispiel 1 2 Gew.-% | | | Beispiel 2 1 Gew.-% | | | Vergleichsbeispiel ohne | | |
|---|---|---|---|---|---|---|---|---|---|
| Anteil im Extrudat | 2 | 4 | 6 | 2 | 4 | 6 | 2 | 4 | 6 |
| Stabdurchmesser in cm | 14,9 | 19,0 | 21,8 | 15,8 | 18,6 | 21,7 | 10,2 | 14,2 | 15,8 |

## Patentansprüche

1. Verfahren zur Herstellung von Polymer-Schäumen in Gegenwart eines carbonsäurehaltigen Polymeren, **dadurch gekennzeichnet, dass** man das Polymer in Gegenwart eines Polymeren (P) schäumt, wobei das Polymere (P) von 0,3 bis 3 Gew.-%, bezogen auf das Gesamtgewicht des Polymeren (P), einer Komponente A enthält, die sich von einer radikalisch polymerisierbaren Carbonsäure ableitet.

2. Verfahren gemäß Anspruch 1, **dadurch gekennzeichnet, dass** das Polymere (P) von 0,5 bis 2 Gew.-%, bezogen auf das Gesamtgewicht von (P), der Komponente A enthält.

3. Verfahren gemäß Anspruch 1 oder 2, **dadurch gekennzeichnet, dass** das Polymere (P) eine weitere Komponente B enthält, die sich von einem Alkylmethacrylat ableitet.

4. Verfahren gemäß Anspruch 3, **dadurch gekennzeichnet, dass** das Polymere (P) mindestens 60 Gew.-%, bezogen auf das Gesamtgewicht von (P), der Komponente B, die sich von Methylmethacrylat ableitet, enthält.

5. Verfahren gemäß mindestens einem der Ansprüche 1 bis 4, **dadurch gekennzeichnet, dass** die radikalisch polymerisierbare Carbonsäure Acrylsäure oder Methacrylsäure oder eine Mischung von diesen ist.

6. Verfahren zur Schaumextrusion, **dadurch gekennzeichnet, dass** man die Schaumextrusion in Gegenwart eines Polymeren (P) durchführt, welches von 0,3 bis 3 Gew.-%, bezogen auf das Gesamtgewicht des Polymeren (P), einer Komponente A enthält, die sich von einer radikalisch polymerisierbaren Carbonsäure ableitet.

7. Verwendung des Polymeren (P) gemäß mindestens einem der Ansprüche 1 bis 5 als Schäumungs-Hilfsmittel in Polymeren oder zur Herstellung von Polymer-Schäumen.

8. Verwendung einer radikalisch polymerisierbaren Carbonsäure für die Herstellung eines Schäumungs-Hilfsmittels, enthaltend ein Polymeres (P), welches von 0,3 bis 3 Gew.-%, bezogen auf das Gesamtgewicht des Polymeren (P), einer Komponente A enthält, die sich von einer radikalisch polymerisierbaren Carbonsäure ableitet.

## Claims

1. A process for producing polymer foams in the presence of a polymer comprising carboxylic acid, wherein the polymer is foamed in the presence of a polymer (P) comprising from 0.3 to 3% by weight, based on the total weight of the polymer (P), of a component A derived from a free-radically polymerizable carboxylic acid.

2. The process according to claim 1, wherein the polymer (P) comprises from 0.5 to 2% by weight, based on the total weight of (P), of the component A.

3. The process according to claim 1 or 2, wherein the polymer (P) comprises a further component B derived from an alkyl methacrylate.

4. The process according to claim 3, wherein the polymer (P) comprises at least 60% by weight, based on the total weight of (P), of the component B derived from methyl methacrylate.

5. The process according to at least one of claims 1 to 4, wherein the free-radically polymerizable carboxylic acid is acrylic acid or methacrylic acid or a mixture of these.

6. A process for foam extrusion, wherein the foam extrusion is carried out in the presence of a polymer (P) comprising from 0.3 to 3% by weight, based on the total weight of the polymer (P), of a component A derived from a free-radically polymerizable carboxylic acid.

7. The use of the polymer (P) according to at least one of claims 1 to 5 as foaming aid in polymers or for producing polymer foams.

8. The use of a free-radically polymerizable carboxylic acid for preparing a foaming aid comprising a polymer (P) comprising from 0.3 to 3% by weight, based on the total weight of the polymer (P), of a component A derived from a free-radically polymerizable carboxylic acid.

## Revendications

1. Procédé de fabrication de mousses polymères en présence d'un polymère contenant un acide carboxylique, **caractérisé en ce que** le polymère est moussé en présence d'un polymère (P), le polymère (P) contenant de 0,3 à 3 % en poids, par rapport au poids total du polymère (P), d'un composant A qui dérive d'un acide carboxylique polymérisable par voie radicalaire.

2. Procédé selon la revendication 1, **caractérisé en ce que** le polymère (P) contient de 0,5 à 2 % en poids, par rapport au poids total de (P), du composant A.

3. Procédé selon la revendication 1 ou 2, **caractérisé en ce que** le polymère (P) contient un autre composant B, qui dérive d'un méthacrylate d'alkyle.

4. Procédé selon la revendication 3, **caractérisé en ce que** le polymère (P) contient au moins 60 % en poids, par rapport au poids total de (P), du composant B qui dérive d'un méthacrylate de méthyle.

5. Procédé selon au moins l'une quelconque des revendications 1 à 4, **caractérisé en ce que** l'acide carboxylique polymérisable par voie radicalaire est l'acide acrylique ou l'acide méthacrylique ou un mélange de ceux-ci.

6. Procédé d'extrusion de mousse, **caractérisé en ce que** l'extrusion de mousse est réalisée en présence d'un polymère (P) qui contient 0,3 à 3 % en poids, par rapport au poids total du polymère (P), d'un composant A qui dérive d'un acide carboxylique polymérisable par voie radicalaire.

7. Utilisation du polymère (P) selon au moins l'une quelconque des revendications 1 à 5 en tant qu'adjuvant de moussage dans des polymères ou pour la fabrication de mousses polymères.

8. Utilisation d'un acide carboxylique polymérisable par voie radicalaire pour la fabrication d'un adjuvant de moussage, contenant un polymère (P), qui contient de 0,3 à 3 % en poids, par rapport au poids total du polymère (P), d'un composant A qui dérive d'un acide carboxylique polymérisable par voie radicalaire.
